(19) Europäisches Patentamt
European Patent Office
Office européen des brevets

(11) **EP 3 279 400 A1**

(12) **EUROPEAN PATENT APPLICATION**
published in accordance with Art. 153(4) EPC

(43) Date of publication:
**07.02.2018 Bulletin 2018/06**

(21) Application number: **15887354.7**

(22) Date of filing: **01.04.2015**

(51) Int Cl.:
*E02B 3/06* (2006.01)   *E02B 3/02* (2006.01)
*A63B 69/00* (2006.01)

(86) International application number:
**PCT/ES2015/070261**

(87) International publication number:
**WO 2016/156630 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fundacion Azti/Azti Fundazioa**
**48395 Sukarrieta (Vizcaya) (ES)**

(72) Inventors:
• **LIRIA LOZA, Pedro**
 **48395 Sukarrieta (Vizcaya) (ES)**
• **DE SANTIAGO GONZALEZ, Iñaki**
 **48395 Sukarrieta (Vizcaya) (ES)**
• **EPELDE PAGOLA, Irati**
 **48395 Sukarrieta (Vizcaya) (ES)**
• **OLEAGA DE LA QUINTANA, Eduardo**
 **48395 Sukarrieta (Vizcaya) (ES)**

(74) Representative: **Herrero & Asociados, S.L.**
 **Cedaceros, 1**
 **28014 Madrid (ES)**

(54) **METHOD AND COASTAL STRUCTURE FOR CREATING WAVES FOR PRACTICING SURFING**

(57)    The main purpose of the structure and method object of the invention is to diffract a swell in a coastal zone, causing the diffracted wave fronts to cross at the breaking point at an angle suitable for Mach Stem formation, thereby generating waves suitable for the activity of surfing, and wherein the structure essentially comprises: a first dimension, A, defined as the effective diameter of the coastal structure (1) in a perpendicular direction to the plurality of wave fronts (2); and a second dimension, B, defined as the effective diameter of the structure (1) in a parallel direction to the plurality of wave fronts (2), creating two centers of diffraction (f1, f2).

**FIG. 1**

EP 3 279 400 A1

**Description**

**TECHNICAL FIELD OF THE INVENTION**

As indicated by the name, the present invention refers to a coastal structure and method for creating waves intended for the aquatic sports sector and, specifically, for the activity of surfing or for other similar sport activities.

More specifically, the main purpose of the coastal structure and method, object of the invention, is to influence the pattern of the propagation of wave fronts to produce the phenomenon known as Mach Stem and thereby generate ideal waves for the activity of surfing, all through an element that has a simple and efficient configuration and is easy to install in any type of coastal zone, and, furthermore, which does not require expensive or frequent maintenance for the proper functioning thereof.

**BACKGROUND OF THE INVENTION**

It is known that the popularity of water sports is currently on the rise, and surfing is one such sport. This type of sport requires minimal equipment, which usually consists of a wetsuit and a surfboard made with a certain degree of floatability. Thus, due to the degree of floatability of the surfboard, as well as the hydrodynamic ergonomics of the same, the surfer is able to navigate wave fronts, taking advantage of the breaking point of each wave.

This motivates a large number of surfers to head to coastal areas on a daily basis in search of ideal waves for surfing, which often leads to overcrowding at areas which are suitable for the practice of this sport, making it difficult to surf and putting the physical integrity of surfers at risk due to the high number of people concentrated in a very small area, in addition to the large difference in the skill level and experience of the surfers.

Another problem lies in the fact that the preferred location for the sport of surfing is usually shared by other water activities that are not complementary, such as swimming, scuba-diving, canoeing or kayaking, or other similar activities, wherein the activity of surfing could lead to possible physical harm to those who perform other said similar activities, as well as to the surfers themselves.

To solve part of said problem, there are beaches or coastal zones where a set of buoys delimits the zone suitable for the activity of surfing, as well as zones that are suitable for swimming and other complementary activities, thereby allowing both activities to take place in the same location, yet all with a significant drawback, given that the amount of space allowed for surfing, as well as for the rest of the sport activities, has to be reduced.

Another known alternative is the use of artificial pools that are able to generate uninterrupted waves. Although they generate ideal waves for surfing, these pools have a series of drawbacks, such as the limited number of surfers that can use them at the same time, as well as the high energy consumption associated with the same, given that artificial waves are generated by the continuous pumping of large amounts of water.

Other solutions, in which high costs are a serious drawback, both in the execution and the maintenance thereof, are those in which at a specific point of the coast chosen for such purpose, large rigid barriers are installed as an artificial reef which occupy a large surface of the coast and are designed to cause waves to break in an ideal way for the activity of surfing, understanding said ideal nature as relative to the conditions of exposure to swell and with minimal conflict with other uses.

Lastly, another known solution in the state of the art relates to the controlled dumping of sand to form sandbars to generate optimal wave fronts for surfing. However, this solution is only viable in areas with a large abundance of sand, where it is also necessary to perform periodic dredging for the proper functioning of said solution. This alternative therefore implies a large investment, both in the cost of moving and accumulating sand, and in the placement thereof on the sea floor. Furthermore, one must take into consideration the extreme difficulty that working in locations where wave fronts break entails, requiring a substantial increase in work and time due to the difficulty of maintaining said sandbars.

One example in the state of the art that integrates some of the aforementioned solutions is that of document JP2852564, which describes a structure that is situated on the sea floor and has a dimension and structure that cause the refraction of the swell.

This refraction consists of a slight variation of the propagation conditions along the wave front, which affects the propagation speed, which by varying slightly along said wave front causes a relative shift and therefore a deviation from the original trajectory.

In other words, the structure described in document JP2852564 aims to divert and orient the waves or wave fronts towards a specific point located between said structure and the coast, a point at which the wave height will locally increased. Moreover, just at the point of maximum wave height, JP2852564 describes the placement of an artificial floor so that the wave breaks in an ideal way for the activity of surfing.

Although this structure provides waves suitable for surfing, it does have some drawbacks. As was previously mentioned, the most significant drawback is the need to place a structure on the sea floor, which must have large dimensions in order to suitably modify the propagation of the swell by means of refraction, which would determine the relative scale of said structure with respect to the wavelength of the waves that must be affected, which further causes problems with regard to the installation and maintenance thereof and, therefore, a greater cost.

Moreover, on the other hand, the solution described in JP2852564 not only needs the previously described first structure to be placed on the sea floor, but also requires a structure placed after the same, in order for the wave to break in a suitable way for surfing, which must have a large dimension if the break of the wave is to be long (100 a 200 m is considered a good distance on a quality break).

## DESCRIPTION OF THE INVENTION

The coastal structure and method, object of the present invention, solve the previously mentioned problems of the state of the art, guaranteeing a safe, efficient and economically viable solution for the activity of surfing.

Specifically, the coastal structure of the invention uses the effect of diffraction to voluntarily modify the wave pattern, by which the scale relative to the same with respect to the wavelength of the waves necessary to create the desired effect will be lower than that of the aforementioned state of the art, which uses the phenomenon of refraction.

This is do to the fact that diffraction is based on the timely modification of the conditions of wave propagation, compared to a slow and slight modification in the case of refraction, on a relative scale which is marked by the wavelength (dozens to hundreds of meters).

On the other hand, the present invention avoids the problem of having to have a structure or artificial sea floor at the point of convergence to cause the waves to break in a suitable way, such as through the techniques in the state of the art based on refraction.

More specifically, the present invention bases the creation of waves for surfing on the phenomenon known as Mach Stem, which is produced at the cross point of the wave fronts and which, in the case concerning this invention, coincides with the breaking point.

This phenomenon of wave interaction, known as Mach Stem, consists of two waves propagating in the same direction and with the small angle between their directions, and in the area of the crossing zone of these waves, an exceptional amplification of the amplitude is produced, as well as of the slopes of said waves.

Several studies, such as by Perroud (1957), Tanaka (1992) and Berger & Koholhase (1976) established different critical minimal angles under which the effect was produced for different types of waves, and, more recently, Peterson (2003) and Soomere (2004) carried out different parameterizations for the crossing of solitary waves which demonstrated the large amplification of the slopes at the crossing zone.

The importance of this phenomenon lies in the fact that it is able to explain the appearance of extraordinarily high waves (those known as A frame, highly sought after by surfers) much more frequently than when measured by other statistical methods or processes of sea-floor refraction or wave-currents. Likewise, this phenomenon also explains the effects of waves with a greater period, such as the amplification of the effects of a tsunami.

These A frame waves are characterized by having a wave height at a well defined point with a progressive decline on both sides, and thus they have a triangular shape as seen from the front (from the beach, for example). The break begins at that point, which is the highest point of the wave, and progressively propagates along the wave front to either side while advancing over a flat bottom with a progressive slope in the advance direction, the depth therefore decreasing. This progressive break is therefore produced due to the gradation of the height of the wave along the front, which makes it so the condition of a progressive break takes place as the wave advances towards a lower depth.

Therefore, given that surfing consists of using a hydrodynamic board to slide down the face of a wave at the area of the greatest slope closest to the break, it is ideal to have a zone to slide down during a suitable time, for which, as was previously mentioned, the break of said wave must begin at a point and be progressive along the wave front as it moves towards the coast.

Thus, the coastal structure of the invention artificially causes the wave to break at a well-defined point and at a greater intensity than at the rest of the beach, such that the best possible and longest-lasting ride is achieved on the board.

More specifically, the coastal structure for the modification of wave fronts of the present invention is a structure that is not connected to the coast above the sea level and is at least partially submerged in a coastal zone which has a plurality of wave fronts such that the diffraction of said wave fronts is caused on both sides of the wave so that they later cross at the zone located between coastal structure and the coastline with a suitable angle to cause the phenomenon known as Mach Stem in the area of the break point of the resulting wave.

Where said wave fronts are defined by a plurality of average representative parameters, such as:

- average height H,
- average period (T),
- average speed in the cycle (U), which is the average speed of the movement of the water particles when a wave passes through, and

• average wavelength (L) of the plurality of wave fronts.

Focusing on the characteristic values commonly used in wave analysis in the case of the average height, period and wavelength, not the result of an arithmetic mean.

And where said structure comprises the following principle dimensions:

• A first dimension, A, defined as the effective diameter of the structure in a perpendicular direction to the plurality of the wave fronts which come into contact with said structure; where said first dimension is equal to or greater than the product of the average speed in the cycle, U, and the average period of the wave fronts, such that:

$$A \geq U \cdot T$$

• A second dimension, B, defined as the effective diameter of the structure in a parallel direction to the plurality of the wave fronts which come into contact with said structure; where said second dimension is equal to or grater than twenty percent of the average wavelength L, of the plurality of wave fronts:

$$B \geq 0.2 \cdot L$$

This way, two specific geometric parameters of design for achieving an optimal diffraction of the wave fronts are defined; understanding the concept of diffraction as the process by which energy disperses laterally toward a shadow area in a perpendicular direction to that of propagation, by passing through the contour of an obstacle.

Thus, the diffraction of the wave fronts is produced when the structure, object of the invention, blocks the passage of the waves, but where an object of just any dimension is not sufficient to be able to generate diffracted waves that cross, forming an ideal angle to be create ideal conditions for surfing, but rather the geometric parameters of the design have to be specific and are defined based on the previously described dimensions A and B, such that the phenomenon of Mach Stem is produced at the breaking point of the wave.

Such dimensions A and B are physically based on a pair of dimensionless parameters linked to the stresses of the wave on the coastal structure and the modifications that the structure imposes on the waves. Said dimensionless parameters are:

- The Keulegan-Carpenter (KC) number, which defines the degree of permanence (temporal variation) of the flow, and regulates the development of vortexes in the wake of the costal structure. Such that in oscillating flows, it is defined as:

$$KC = \frac{U \cdot T}{D}$$

Where:

- U = the average speed of the cycle of the wave front,
- T = the wave period
- D = the effective diameter of the coastal structure

This way, when the KC is greater than 500, it is considered that the coastal structure is very small with respect to the flow, and a permanent system for each direction is achieved, developing permanent vortexes, the drag force being the dominant dynamic. And for a KC lower than 1, it is assumed that the coastal structure is so big that it does not allow time for vortexes or dragging forces to develop in the flow and the forces of inertia are the dominant forces. Therefore, for KC values greater than 1 but lower than 500, there is a process in which both dynamics, inertia and drag, must be taken into account.

Linking the dimensionless KC number to the structure, object of the invention, the aim is for said structure to achieve a KC is less than 1, thereby allowing the forces of inertia to dominate in the creation of wave fronts. Therefore, in relation to the first dimension, A, defined as the effective diameter of the structure in a perpendicular direction to the plurality of the wave fronts that come into contact with said structure, it is understood that the effective diameter, D, must be equal to the first dimension, A, and the KC must be less than 1; therefore, said first dimension, A, must be equal to or greater than the product of the average speed in the cycle, U, and the average period of the wave fronts, T, considering, therefore, that D = A; it is found that:

$$A \geq U \cdot T$$

- The other dimensionless parameter is relative size ($D_r$), which is defined as the relation between the effective diameter of the structure and the average wavelength of the wave front (Dr=D/L).

Said dimensionless parameter determines the degree of modification of the diffraction the structure is able to exert on the swell. This way, when the Dr is less than 0.2, it is understood that the structure is small with respect to the wavelength, and the effects of modifying the swell by the same are limited to the vicinity of the surface of the structure. Likewise, when the Dr is greater than 0.2, the effects of diffraction and radiation of the structure begin to strongly modify the swell and the structure is said to be large with respect to the wavelength.

And by linking the dimensionless Dr number to the structure, object of the invention, the aim is for said structure to achieve a Dr greater than 0.2, such that the structure strongly modifies the swell. Therefore, in relation to the second dimension, B, defined as the effective diameter of the structure in a parallel direction to the plurality of the wave fronts that come into contact with said structure, it is considered that the effective diameter, D, must be equal to the second dimension, B, and the Dr must be greater than 0.2; thus, said second dimension, B, must be greater than or equal to twenty percent of the average wavelength, L, of the plurality of wave fronts, therefore considering that D=B, obtaining:

$$B \geq 0.2 \cdot L$$

It is worth mentioning that once the coastal structure, object of the invention, is set up, both additional KC and Dr parameters will comply with a certain range of wavelengths of the swell, the aim being for it to be the most common at the depth at which the structure is placed and based on the characteristic periods of the swell climate of the zone.

This way, thanks to a preferably impermeable coastal structure and to the geometric parameters A and B, artificial and controlled diffraction of the wave fronts are achieved, creating optimal waves for every level of surfing.

On the other hand, in order to achieve said diffraction, the structure of the invention comprises two centers of diffraction located on both sides of the same, defining the following parameters:

- DST, or distance from the middle point between the centers to the cross point of the diffracted waves; and
- $\alpha$ is half the crossing angle of the wave fronts at the distance DST. In other words, the crossing angle of the wave fronts at the distance DST is 2$\alpha$.

Where B, the second dimension defined as the effective diameter of the structure in a parallel direction to the plurality of wave fonts to come into contact with said structure, may be equal to the product of two times the distance DST by the tangent of the angle $\alpha$, being:

$$B = 2 \cdot DST \cdot tan\ \alpha$$

Therefore, based on the distance between the centers of diffraction of the coastal structure and possible circular fronts (assuming a flat bottom) propagating towards the beach from each one, the distance from the center of the two centers in the direction of the swell and in the direction of the coast, the crossing angle of the fronts is defined by the following equation:

$$\alpha = \arctan \left( \frac{B}{2 \cdot DST} \right) \quad \rightarrow \quad B = 2 \cdot DST \cdot tan\ \alpha$$

This way, it may described that the distance DST is equal to the quotient between the second dimension, B, defined as the effective diameter of the structure in a parallel direction to the plurality of wave fonts that come into contact with said structure, and by the product of two times the tangent of the angle $\alpha$, being:

$$DST = \frac{B}{2 \cdot \tan \alpha}$$

And with the aim of being able to calculate the average wavelength L, of the plurality of wave fronts, if they are unknown, or by taking into consideration the concept of the distance DST linked to the Mach Stem, as well as an area of reduced depths, it may be defined that: $L = T \cdot \sqrt{gh}$ *such that g = 9.81 (m/s²)(acceleration of gravity)*

The term T referring to the average period of the swell and h being the average depth at which the coastal structure is located.

With regard to the optimal angle (2α) from the point of view of the appearance of the Mach Stem phenomenon, it must first be stated that this angle depends on the relation between the height H of the wave and the wavelength to the depth h.

Peterson et al. (2003) shows that for two solitary waves with the same amplitude, which may generally be supposed in our case, given that we are in an area of reduced depths (h≈L/20), the critical angle α of maximum amplification complies with the equation of Miles (1977) for waves reflected off a vertical wall, the crossing angle of the fronts being twice that of the critical angle α, defined by the equation of Miles:

$$(critical)\alpha = \sqrt{\frac{3H}{h}}$$

However, Tanaka (1992) demonstrates that this only occurs when the relation between the depth and the wave height is less than 0.12, in other words, relatively far from the breaking zone. In this sense, it was found that for the relation between the height of an incoming wave and the depth closest to the breaking zone, the critical angle α is reduced with respect to the value given by the equation of Miles.

Furthermore, based on his analysis for a range of relations between the height of the incoming wave and the depth (H/h) of 0.3 (close to the breaking point of the resulting amplified wave), it is defined that the critical angle α is produced between 35°-40°. Furthermore, in his study he defines that for an angle α of approximately 20°, the resulting wave (Stem wave) in its evolution is similar to a stable solitary wave.

Further taking into account that in the area of the critical angle α, the amplification is quickly reduced if said angle is exceeded and understanding that the formation of a stable amplified wave in the area of the crossing of the fronts is beneficial for achieving waves for the activity of surfing, the optimal range of crossing angles of the fronts (2α) may be defined a priori within the range comprised between 30° and 60°, in other words, α would be comprised between 15° and 30°, a value below 35° - 40°, where the critical angle α is established, in which the maximum amplification is produced, both in the amplitude and in the slope of the resulting wave fronts.

Therefore, for practical purposes, the structure of the invention is designed so that the critical angle α of maximum amplification is not exceeded, yet getting as close as possible, since, in addition to achieving a more stable response, the quick decrease in the Mach Stem effect is avoided, by exceeding the aforementioned critical angle α.

Therefore, with the proposed invention a novel coastal structure with a simple configuration is obtained, with a smooth contour without sharp edges which avoids undesired sudden changes to the waves, and which enables a series of perfectly diffracted waves to be obtained for the activity of surfing in any type of coastal zone with permanent wave fronts.

## DESCRIPTION OF THE DRAWINGS

As a complement to the description provided herein, and for the purpose of helping to make the characteristics of the invention more readily understandable, in accordance with a preferred practical embodiment thereof, said description is accompanied by a set of figures constituting an integral part of the same, which by way of illustration and not limitation represent the following:

Figure 1 shows a schematic top plan view of the coastal structure, object of the invention, along with the main geometric parameters, as well as the representation of the diffracted wave fronts.

Figure 2 shows a schematic view of a profile of a wave front along with its main geometric parameters.

**PREFERRED EMBODIMENT OF THE INVENTION**

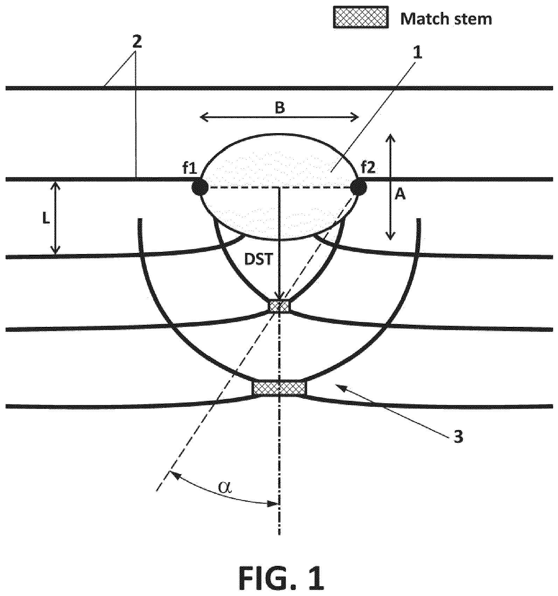

Looking at figure 1, it may be observed that that the coastal structure (1), object of the invention is configured for the diffraction of wave fronts (2) and is submerged in a coastal zone that has a plurality of wave fronts (2), which define a plurality of average ponderable parameters, such as the average height, the average period, average speed in the cycle, and the average wavelength L of the plurality of wave fronts (2).

And with regard to its main dimensions, these are defined as:

- The first dimension, A, is the effective diameter of the coastal structure (1) in a direction perpendicular to the plurality of the wave fronts that come into contact with said coastal structure (1); where said first dimension is equal to or greater than the product of the average speed in the cycle, U, and the average period of the wave fronts (2), such that:

$$A \geq U \cdot T$$

- The second dimension, B, is the effective diameter of the coastal structure in a parallel direction to the plurality of the wave fronts that come into contact with said structure (1); where said second dimension is equal to or greater than twenty percent of the average wavelength, L, of the plurality of wave fronts (2), such that:

$$B \geq 0.2 \cdot L$$

- And taking into account the diffraction of the wave fronts produced by the impact against said costal structure (1) which creates two diffraction centers (f1, f2) which are related to the Mach Stem point previously described; the following parameters are defined:

  - DST is the distance from the middle point of the centers (f1, f2) to the cross point of the diffracted waves (3);
  - $\alpha$ is half the crossing angle of the diffracted wave fronts (3) at the distance DST; and where B, the second dimension defined as the effective diameter of the coastal structure in a parallel direction to the plurality of wave fonts (2) that come into contact with said coastal structure, may be equal to the product of two times the distance DST by the tangent of the angle $\alpha$, being:

$$B = 2 \cdot DST \cdot tan\ \alpha$$

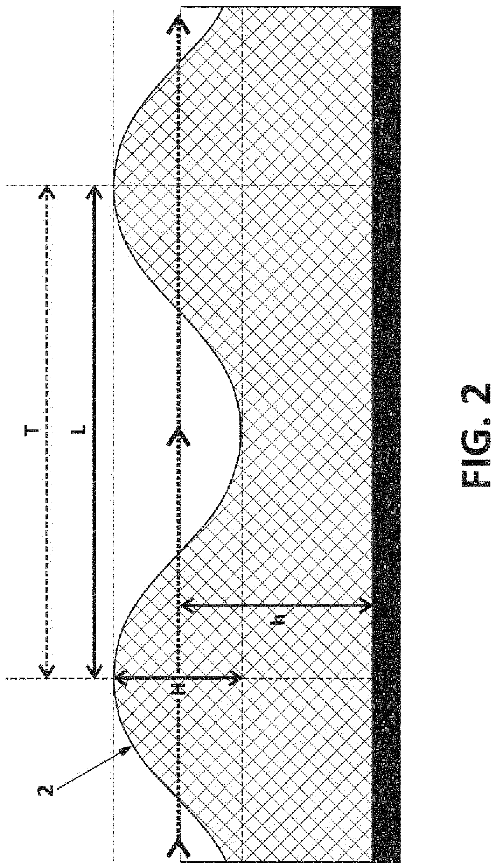

By way of example, we may assume the existence of a rectilinear beach with the following data supported on the parametrical dimensions of figure 2, where the data are:

- A uniform slope, i, of 2% (typical value on beaches with average sand),
- a wave height design , $h_0$, of 1.5
- a period, T, of 12 seconds,
- an optimal crossing angle, $2\alpha$, of 60°
- an average depth at the breaking point $h_r$ of approximately 2 m.

This way, and taking into account shallow depths for the calculation of the wavelength, we have:

$$L = 12 \cdot \sqrt{g\,h}$$

And considering the average depth of the breaking point $h_r$ of the wave fronts, we can relate it to the average depth h at which the structure is located and to the distance DST, knowing the average slope of the coastal floor, i, in the following way:

$$h = h_r + i \cdot DST$$

Where said average depth of the breaking point $h_r$ is, for a wave with a height H an in line with the linear wave theory by Airy, that for which the depth is equal to 0.78 H.
So:

$$L = 12 \cdot \sqrt{g \cdot (2 + DST \cdot 0.02)}$$

And knowing that $B \geq 0.2 \cdot L$ and $B = 2 \cdot DST \cdot \tan \alpha$, the following equation is obtained:

$$5B = 12 \cdot \sqrt{g \cdot (2 + \frac{B}{2\tan30} \cdot 0.02)}$$

$$\left(\frac{5B}{12}\right)^2 - \frac{B}{2\tan30} \cdot 0.2 - 20 = 0 \rightarrow 0.1736B^2 - 0.173B - 20 = 0 \rightarrow B = 11.2m$$

And to calculate the dimension A, we have that $A \geq U \cdot T$, U being the average speed during a cycle, and geometrically calculated as the circumference traveled when a wave passes between the period:

$$U = \frac{\pi \cdot ho}{T} \rightarrow U = \frac{\pi \cdot 1.5}{12} \rightarrow A = 4.7m$$

Thereby obtaining main minimal dimensions of the coastal structure (1) exemplified for the specific case proposed.

Where additionally it is observed how the coastal structure (1) has an elliptical geometry from a top plan view, wherein the first of its main axes corresponds to the dimension A, and the second main axis, orthogonal to the first, corresponds to dimension B; having a smooth contour without sharp edges that may cause vortexes or undesired flows that negatively modify the swell diffraction for the intended purpose.

In relation to the height and anchorage of the coastal structure (1), it preferably has a height that is equal to or greater than the average depth of the coastal zone minus the minimum design height of the wave front (2) in order to guarantee that the wave fronts break over the coastal structure and a large part of its energy is dissipated in the diffraction; said average depth being a parameter that is statistically calculated based on the coastal zone where the coastal structure (1), object of the invention, will be installed.

Thus, the method of the invention for the creation of waves for the activity of surfing based on the previously described coastal structure (1) comprises the following steps:

- placing the coastal structure (1) in a coastal zone with a plurality of wave fronts such that it is not connected to the coast,
- using said structure to cause a diffraction of the wave fronts on both sides of the same, and
- causing the crossing of the diffracted wave fronts with an angle ($2\alpha$) such that an amplification of the amplitude and the slope is produced due to the phenomenon known as Mach Stem in the area of the breaking point of the resulting wave, but where the angle $\alpha$ is less than or equal to the critical angle $\alpha$ of maximum amplification.

Lastly, according to a possible embodiment, the support of said coastal structure (1) on the sea floor of the coastal zone can be made by using multiple anchoring mechanisms, such as gravitational counterweights, braces anchored to a concrete block or similar, located on said sea floor, etc.

## Claims

1. A coastal structure (1) for the creation of waves for surfing, intended to be submerged, at least partially, at a coastal area that has a plurality of wave fronts (2) and which comprises:

    - a first dimension A in a perpendicular direction to the plurality of wave fronts (2), and
    - a second dimension B in a parallel direction to the plurality of wave fronts (2);

    **characterized in that** said dimensions A and B are such that when a wave front crashes against said coastal structure (1), diffractions are produced on both sides of the structure, each one of them centered on both diffraction centers (f1,f2) located on the contour, such that the diffracted wave fronts (3) cross at an angle $(2\alpha)$ in the zone located between the coastal structure (1) and the coastline in the area of the breaking point of the resulting wave, where $\alpha$ is less than or equal to the critical angle $\alpha$ in which the maximum amplification is produced, both in amplitude and on the slopes of the resulting wave fronts.

2. The coastal structure (1) for the creation of waves for the activity of surfing according to the first claim, **characterized in that**:

   - the first dimension A is equal to or greater than the product of the average speed in the cycle U of the wave fronts and the average period of the wave fronts (2) T; such that:

$$A \geq U \cdot T$$

   - the second dimension B is greater than or equal to twenty percent of the average wavelength L, of the plurality of wave fronts (2), such that:

$$B \geq 0.2 \cdot L$$

   therefore
   - the distance DST from the middle point of the centers (f1, f2) to the crossing point of the diffracted waves (3) is equal to the quotient between the second dimension B of the coastal structure (1) by the product of two times the tangent of the angle $\alpha$, such that:

$$DST = \frac{B}{2 \cdot \tan \alpha}$$

3. The coastal structure (1) for creating waves for the activity of surfing according to claim 2, **characterized in that** the average wavelength L of the wavelengths of the plurality of wave fronts (2) is defined as:

$$L = T \cdot \sqrt{gh}$$

   g being acceleration of gravity, T the average period of the swell and h the average depth at which the coastal structure is located.

4. The coastal structure (1) for the creation of waves for the activity of surfing according to the preceding claims, **characterized in that** the critical angle $\alpha$ is defined as:

$$(\text{critical})\alpha = \sqrt{\frac{3H}{h}}$$

   H being the wave height.

5. The coastal structure (1) for the creation of waves for the activity of surfing according to the preceding claims, **characterized in that** the angle $2\alpha$ is comprised between 30 and 60 degrees.

6. The coastal structure (1) for the creation of waves for the activity of surf according to any of the preceding claims, **characterized in that** its height is equal to or greater than the average depth of the coastal zone minus the height of the minimum wave front (2) of the design.

7. The coastal structure (1) for the creation of waves for the activity of surfing according to any of the preceding claims, **characterized in that** it has a smooth contour without sharp edges.

**8.** The coastal structure (1) for the creation of waves for the activity of surfing according to any of the preceding claims, **characterized in that** it is made of an impermeable material.

**9.** A method for the creation of waves for the activity of surfing, **characterized in that** it comprises the stages of:

- placing the coastal structure in a coastal zone with a plurality of wave fronts according to claims 1 to 6 such that it is not connected to the coast,
- using said structure to cause a diffraction of the wave fronts on both sides of the same, and then
- causing the crossing of the diffracted wave fronts with an angle $2\alpha$ such that an amplification of the amplitude and the slope is produced due to the phenomenon known as Mach Stem in the area of the breaking point of the resulting wave, the angle $\alpha$ being less than or equal to the critical angle $\alpha$ of maximum amplification, both in amplitude and in the slope of the resulting wave front according to said phenomenon.

**10.** The method for the creation of waves for the activity of surfing according to claim 9, **characterized in that** the angle $2\alpha$ is comprised between 30 and 60 degrees.

**11.** The method for the creation of waves for the activity of surfing according to claim 9 or 10, **characterized in that** the structure is supported by the sea floor of the coastal zone.

**FIG. 1**

**FIG. 2**

## INTERNATIONAL SEARCH REPORT

| International application No. |
|---|
| PCT/ES2015/070261 |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
E02B, A63B

Documentation searched other than minimum documentation to the extent that such documents are included in the fields searched

Electronic data base consulted during the international search (name of data base and, where practicable, search terms used)

EPODOC, INVENES, WPI

**C. DOCUMENTS CONSIDERED TO BE RELEVANT**

| Category* | Citation of document, with indication, where appropriate, of the relevant passages | Relevant to claim No. |
|---|---|---|
| X | JP H05156617 A (KINOSHITA TAKESHI ET AL.) 22/06/1993, Abstract of the DataBase EPODOC, retrieved from EPOQUE (AN: JP-31936791-A); figures. | 1, 2, 4-11 |
| X | JP H04254607 A (HAZAMA GUMI ET AL.) 09/09/1992, Abstract of the DataBase EPODOC, retrieved from EPOQUE (AN: JP-41257090-A); figures 1 and 2. | 1, 2, 4-11 |
| A | WO 2013016767 A1 (BOTTEGAL TROY JOHN) 07/02/2013, paragraphs [0042-0065]; figures 1-6. | 1, 6, 7, 8, 11 |
| A | 31/10/1988, KUDO K et al. "Wave focusing by a submemrged plate". Conference Proceedings Article IEEE. Pags: 1061 - 1066 | 1, 9 |

☒ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 21/12/2015 | **(23/12/2015)** |
| Name and mailing address of the ISA/ | Authorized officer |
| OFICINA ESPAÑOLA DE PATENTES Y MARCAS Paseo de la Castellana, 75 - 28071 Madrid (España) Facsimile No.: 91 349 53 04 | M. Cañadas Castro Telephone No. 91 3495429 |

Form PCT/ISA/210 (second sheet) (January 2015)

## INTERNATIONAL SEARCH REPORT

| International application No. |
| --- |
| PCT/ES2015/070261 |

C (continuation). DOCUMENTS CONSIDERED TO BE RELEVANT

| Category * | Citation of documents, with indication, where appropriate, of the relevant passages | Relevant to claim No. |
| --- | --- | --- |
| A | US 5267812 A (SUZUKI TATSUO  ET AL.) 07/12/1993, the whole document. | 1 |
| A | US 2007186338 A1 (SAUERBIER CHARLES E) 16/08/2007, description, figure 7. | 1 |

Form PCT/ISA/210 (continuation of second sheet) (January 2015)

## INTERNATIONAL SEARCH REPORT

Information on patent family members

International application No.

PCT/ES2015/070261

| Patent document cited in the search report | Publication date | Patent family member(s) | Publication date |
|---|---|---|---|
| JPH05156617 A | 22.06.1993 | JP3113714B B2 | 04.12.2000 |
| JPH04254607 A | 09.09.1992 | JP2852564B B2 | 03.02.1999 |
| WO2013016767 A1 | 07.02.2013 | GB2508110 A<br>AU2012289825 A1 | 21.05.2014<br>27.02.2014 |
| US5267812 A | 07.12.1993 | JPH05123076 A<br>JP2992940B B2<br>JPH04304829 A<br>JP2607979B B2 | 21.05.1993<br>20.12.1999<br>28.10.1992<br>07.05.1997 |
| US2007186338 A1 | 16.08.2007 | US7625153 B2<br>US2008221294 A1 | 01.12.2009<br>11.09.2008 |

**INTERNATIONAL SEARCH REPORT**

International application No.

PCT/ES2015/070261

**CLASSIFICATION OF SUBJECT MATTER**

*E02B3/06* (2006.01)
*E02B3/02* (2006.01)
*A63B69/00* (2006.01)

Form PCT/ISA/210 (extra sheet) (January 2015)

**REFERENCES CITED IN THE DESCRIPTION**

**Patent documents cited in the description**

- JP 2852564 B